# EUROPEAN PATENT APPLICATION

(11) **EP 1 329 416 A1**
(43) Date of publication of application: **23.07.2003**
(21) Application number: 00963086.4
(22) Date of filing: 03.10.2000
(51) Int. Cl.: C01B 3/00, C22C 14/00, H01M 8/04, F17C 11/00

(54) **METHOD OF ABSORPTION-DESORPTION OF HYDROGEN STORAGE ALLOY AND HYDROGEN STORAGE ALLOY AND FUEL CELL USING SAID METHOD**

(71) Applicant: Tohoku Techno Arch Co., Ltd., Sendai-shi, Miyagi 980-0845 (JP); Okada, Masuo, Sendai-shi, Miyagi 982-0807 (JP)
(72) Inventor: OKADA, Masuo, Sendai-shi, Miyagi 982-0807 (JP); YAMASHITA, Shinichi, Narita-shi, Chiba 286-0011 (JP)
(74) Representative: Weber, Dieter, Dr.
(86) International application number: JP0006890
(87) International publication number: WO02028768

(57) **Abstract**

In the present invention, an alloy temperature of a hydrogen storage alloy in the final stage of a hydrogen desorption process (T2) is made to a temperature higher than an alloy temperature of the hydrogen storage alloy in the initial stage of the hydrogen desorption process (T1) (T2 > T1) and the alloy temperature in the final stage (T2) is controlled to a temperature where a hydrogen pressure at a boundary point between a plateau region of a PCT curve and an inclined region adjacent thereto is 0.08 MPa or more.

## Description

### Technical Field

The present invention concerns a hydrogen absorption and desorption method of repeating pressurization and depressurization of hydrogen for a hydrogen storage alloy and, more in particular, it relates to a hydrogen absorption and desorption method of increasing the amount of hydrogen desorbed in a practical pressure range and a temperature range, as well as a fuel cell using the absorption and desorption method.

### Background Art

At present, along with increase in the amount of use of fossil fuels such as petroleum, there are fears of acid rains caused by NOx (nitrogen oxides) and also global warming due to increasing CO₂. Since such environmental disruption gives severe problems, intense attention has been attracted to the development and practical use of various clean energies gentle to the earth. One of new energy development is a practical use of hydrogen energy. Hydrogen is a constituent element of water present infinitely on the earth which can be formed by using various primary energies, as well as it can be used as a fluid energy instead of existent petroleum with no worry of environmental disruption since combustion products of hydrogen consists only of water. Further, different from electric power, it has excellent characteristics such as relatively easy storage thereof.

Accordingly, studies on hydrogen storage alloys as storage and transportation media of hydrogen have been made vigorously in recent years, and practical use therefor has been expected. The hydrogen storage alloys are metals and alloys capable of absorbing and desorbing hydrogen under appropriate conditions. By the use of the alloys, hydrogen can be stored at a lower pressure and at a higher density compared with existent hydrogen reservoirs and the volumic density thereof is substantially equal with or higher than liquid hydrogen or solid hydrogen.

As the hydrogen storage alloys, in addition to AB5 type alloys such as LaNi₅ or AB2 type alloys such as TiMn₂ already put to practical use at present, hydrogen storage alloys having body-centered cubic structures such as V, Nb, Ta or CrTiMn system and CrTiV system have also been studied as proposed, for example, in JP-A No. 10-10225.

For the hydrogen absorption and desorption method, methods of absorbing and desorbing hydrogen at a constant temperature have been described in JP-A No. 10-110225 and No. 7-252560. In the latter JP-A No. 7-252560, while the activating pre-treatment is conducted by a two-stage treatment of a low temperature pre-stage and a post-stage, the absorption/desorption temperature is constant (20°C). Further, while JP-B No. 59-38293 describes a method of heating to 100°C (column 4, lines 32 - 39), this is also an absorption and desorption method at a constant temperature.

On the other hand, application use utilizing hydrogen described above includes fuel cells. Since the fuel cells have higher power generation efficiency compared with thermal power, generation, they have been studied vigorously and remarkable improvement for the power generation efficiency in the feature has been expected. As the fuel for the fuel cell, hydrogen in natural gas or methanol, etc. is utilized. Since the fuel cells using hydrogen as the fuel are simple in the structure and exhibit excellent performance, alkali electrolyte type and solid polymeric film type fuel cells with a power of about 10 kW have been used as an energy source for mobile engines such as satellites, deep-sea vessels, and electric automobiles.

### [Subject to be Solved by the Invention]

In AB5 type alloys such as LaNi₅ or BCC type alloys put to practical use at present, the equilibrium pressure with hydrogen can be controlled by controlling the alloy ingredients. Further, while the equilibrium pressure between the hydrogen storage alloy and hydrogen can be controlled by the operation temperature, such existent methods lack in the technical idea of elevating the temperature in the final stage of hydrogen desorption thereby increasing the amount of hydrogen that can be utilized effectively.

Accordingly, an object of the present invention is to provide a hydrogen absorption and desorption method capable of absorbing and desorbing hydrogen in more amount by effectively utilizing hydrogen, as well as a fuel cell using the method.

### Disclosure of the Invention

For solving the foregoing subject, a hydrogen absorption and desorption method for a hydrogen storage alloy according to the present invention has a feature in that an alloy temperature of said hydrogen storage alloy in the final stage of a hydrogen desorption process (T2) is made higher than an alloy temperature of the hydrogen storage alloy in the initial stage of the hydrogen desorption process (T1) (T2 > T1), and the alloy temperature in the final stage (T2) is controlled to a temperature where a hydrogen pressure at a boundary point between a plateau region of a PCT curve and an inclined region adjacent thereto is a normal pressure or higher.

According to the feature described above, since the alloy temperature of the hydrogen storage alloy in the final stage of the hydrogen desorbing process (T2) is made higher than the alloy temperature in the initial stage of the hydrogen desorption process (T1), the occluded hydrogen which was neither desorbed nor utilized in the prior art can be desorbed and utilized, as well as since the alloy temperature in the final stage (T2) is controlled to such a temperature that a hydrogen pressure at the boundary point between a plateau region of a PCT curve and an inclined region adjacent thereto is at a normal pressure or higher, requirement of a negative pressure pump can be avoided in the handling of desorbed hydrogen, and desorbed hydrogen can be obtained at a pressure easy to practical use.

In the present invention, the time point for elevating the alloy temperature by heating is defined as at the final stage of the hydrogen desorption process. This is because temporal elevation of temperature for the alloy only during the initial stage of the hydrogen desorption process or in a certain period during the hydrogen desorption process has an effect of increasing the hydrogen desorption speed but it does not increase the amount of hydrogen that can be utilized effectively. Further, in order to increase the amount of hydrogen that can be utilized effectively, it is effective to elevate the temperature at the final stage of the hydrogen desorption process.

Further, the boundary point between the plateau region and the inclined region adjacent thereto of the PCT curve defined in the present invention is an intersection between a tangential line of an inclined region and a tangential line near the central portion of the plateau region in the PCT curve in accordance with the Sievert's law and, in a case where the turning point can be defined, it is an intersection with a tangential line passing through the turning point.

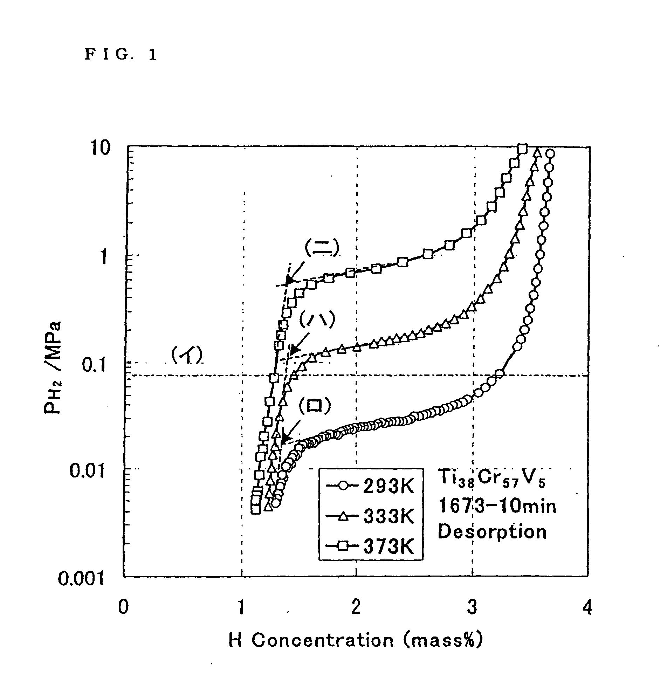

Fig. 1 shows high pressure PCT curves in the desorption process of a Ti₃₈Cr₅₇V₅. Symbols ( 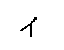 ), (□) show the range for the boundary points. The amount of hydrogen utilizable in a range from a normal pressure to 30 atm is 0.3% at 20°C, 1.87% at 60°C and 1.84% at 100°C of the hydrogen storage alloy temperature in a case where the hydrogen is desorbed at a constant temperature. Further, in a hydrogen desorption specimen at 60°C according to the invention, the amount of hydrogen that can be utilized can be increased to 2.15% by elevating the temperature to 100°C in the final stage of the hydrogen desorption process. In the drawing, arrow ( 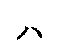 ) denotes a boundary point which is at 0.12 MPa. Further, in a hydrogen desorption specimen at 100°C, the hydrogen amount was increased to 1.93% by elevating the temperature to 150°C. As described above, it can be seen that hydrogen of high practical utility that can be utilized effectively, can be increased remarkably by elevating the temperature to a level where the boundary point is within a range from 0.08 MPa to 1 MPa.

In the hydrogen absorption and desorption method of the hydrogen storage alloy according to the invention, it is preferred that the hydrogen storage alloy has a hydrogen pressure of from 0.08 MPa to 1 MPa at the boundary point between the plateau region and the inclined region adjacent thereto of the PCT curve of the alloy at the alloy temperature in the initial stage of the hydrogen desorption process (T1).

With such a constitution described above, the alloy having a hydrogen pressure of 0.08 MPa to 1 MPa at the boundary point between the plateau region and the inclined region adjacent thereto of the PCT curve of the alloy at the alloy temperature in the initial stage of the hydrogen desorption process (T1) can increase the effective hydrogen effectively by making the temperature of the alloy to the high temperature (T2) in the final stage.

In the hydrogen absorption and desorption method for the hydrogen storage alloy according to the invention, the alloy temperature in the final stage (T2) is preferably 150°C or lower.

With such a constitution described above, the alloy temperature in the hydrogen desorption process (T1) and the alloy temperature in the final stage of the hydrogen desorption process (T2) can be made near the normal temperature region, which can save the heat energy required for temperature elevation (heating), as well as reduce the cost of the temperature elevation device and improve the practicality.

In the hydrogen absorption and desorption method for the hydrogen storage alloy according to the invention, it is preferred to define the process at or after the instance where hydrogen contained in the hydrogen storage alloy is decreased to any residual amount of 50% or less in the hydrogen desorption process as the final stage of the hydrogen desorption process.

Elevation of the alloy temperature by conducting heating in the initial stage of the hydrogen desorption process where hydrogen contained in the hydrogen storage alloy is 50% or more can increase the hydrogen desorption rate but the amount of effectively utilizable hydrogen is not increased, whereas heating necessary for increasing the amount of effectively utilizable hydrogen can be conducted efficiently with the constitution described above.

In the hydrogen absorption and desorption method for the hydrogen storage alloy according to the invention, it is preferred to define, as the final stage of hydrogen desorption, the process at or after the instance where hydrogen contained in the hydrogen storage alloy is decreased to any residual amount of 25% or less during the hydrogen desorption process.

Elevation of the alloy temperature by conducting heating in the initial stage of the hydrogen desorption process where hydrogen contained in the hydrogen storage alloy is 25% or more has an effect of increasing the hydrogen desorption rate but the amount of effectively utilizable hydrogen is small, whereas heating necessary for increasing the amount of effectively utilizable hydrogen can be conducted efficiently with the constitution described above. That is, it is effective to elevate the temperature in the final stage of the hydrogen desorption process at or after the instance where hydrogen in the hydrogen storage alloy is decreased to any residual amount of 50% or less, more preferably, 25% or less, by which the amount of effectively utilizable hydrogen can be increased with less heat energy (amount of heating).

A fuel cell according to the present invention comprises a hydrogen storage tank for incorporating a hydrogen storage alloy, a temperature control device for elevating or lowering directly the temperature of the hydrogen storage alloy or an atmospheric temperature of the storage alloy, a fuel cell of outputting electric power via chemical change of hydrogen supplied from the hydrogen storage tank and a control section for conducting control such that the alloy temperature of the hydrogen storage alloy in the final stage of a hydrogen desorption process (T2) is made higher than the alloy temperature of the hydrogen storage alloy in the initial stage of the hydrogen desorption process (T1) (T2 > T1) and that the alloy temperature in the final stage (T2) is at a temperature where the hydrogen pressure at the boundary point between a plateau region and an inclined region adjacent thereto of a PCT curve is a normal pressure or higher.

According to the feature, since the alloy temperature of the hydrogen storage alloy in the final stage of the hydrogen desorption process (T2) is made higher than the alloy temperature in the initial stage of the hydrogen desorption process (T1), occluded hydrogen which was never desorbed and utilized in the prior art can be desorbed and utilized, as well as since the alloy temperature in the final stage (T2) is controlled to a temperature where the hydrogen pressure at the boundary point between the plateau region and the inclined region adjacent thereto of the PCT curve is the normal pressure or higher, desorbed hydrogen can be obtained at a pressure higher than the normal pressure easy to be served for practical use and requirement of a negative pressure pump for handling the desorbed hydrogen can be avoided.

In the fuel cell according to the invention, it is preferred that the control section can properly control the pressure, temperature and flow rate of the hydrogen gas supplied to the hydrogen storage tank and the fuel cell.

With the constitution described above, by controlling the pressure, temperature and the flow rate of the hydrogen gas, the amount of electric power generation in the fuel cell can be properly controlled depending on the load and the utilization efficiency of hydrogen used in the fuel cell can be improved.

In the fuel cell according to the invention, it is preferred that the temperature control device described above can utilize the heat dissipated from the fuel cell or the heat of exhaust gases exhausted from the fuel cell for the temperature elevation.

With the constitution described above, since the dissipated heat or discharged heat from the fuel cell can be utilized for the temperature elevation of the hydrogen storage alloy, electric power, etc. are no more required for the temperature elevation of the hydrogen storage alloy, which can improve the efficiency in the overall hydrogen fuel cell.

### Brief Description of the Drawings

Fig. 1 is a graph showing high pressure PCT curves (method determined original point before activation) in the desorption process of a Ti₃₈Cr₅₇V₅ alloy used in Example 2 of the invention.
Fig. 2 is a graph showing high pressure PCT curves in the desorption process of an MmNi_{4.5}Al_{0.5} alloy used in Example 1 of the invention.
Fig. 3 is a graph showing high pressure PCT curves (method determined original point on evaccuation) of a Ti₃₈Cr₅₇V₅ alloy used in Example 2 of the invention.
Fig. 4 is a system flow showing an embodiment of a fuel cell in Example 1 according to the invention.

### Best Mode for Practicing the Invention

An embodiment of the present invention is to be described with reference to the drawings.

### (Example 1)

After weighing commercially available starting materials, the mixture was subjected to arc melting in argon with a water cooled copper hearth to prepare 20 g of an MmNi_{4.5}Al_{0.5} alloy, which was successively kept at 1100°C for 8 hours and then quenched. The quenched alloy specimens were measured for their high pressure PCT characteristics with a PCT characteristic measuring apparatus manufactured by Suzuki Shokan, Japn.

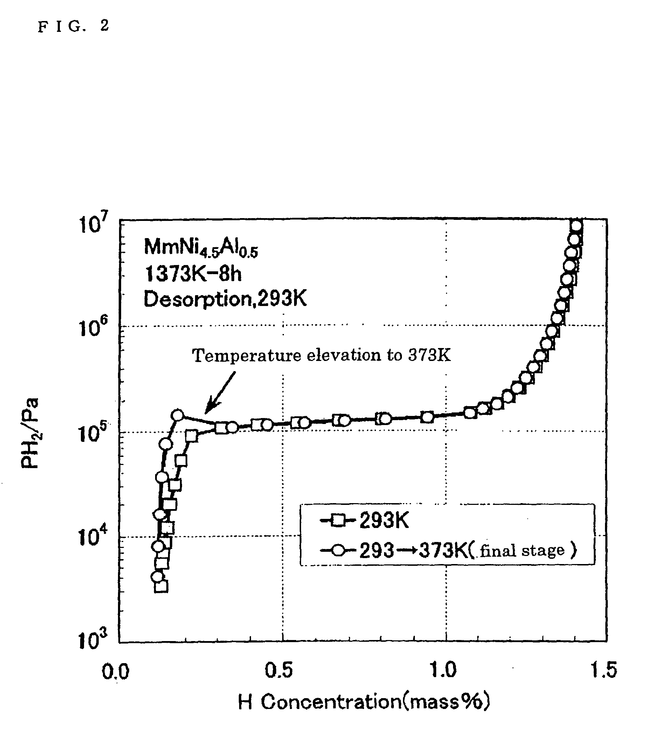

Fig. 2 shows high pressure PCT curves in the hydrogen desorption process of the MmNi_{4.5}Al_{0.5} alloy. A hydrogen pressure at a boundary point between a plateau region and an inclined region of a PCT curve at 20°C is 0.11 MPa. Measured data indicated by squares (□) show a PCT curve where hydrogen was desorbed at a constant temperature of 20°C, whereas measured data indicated by circles (○) show a PCT curve in a case of elevating the temperature of the hydrogen storage alloy from 20°C to 100°C at an instance where the residual amount of hydrogen was 21%. It could be verified from the data that the effective hydrogen occlusion amount could be increased by 12% by heating the hydrogen storage alloy to 100°C from the instance where the amount of residual hydrogen was 21% in a case of utilizing the hydrogen storage alloy within a range from 0.1 MPa to 1 MPa.

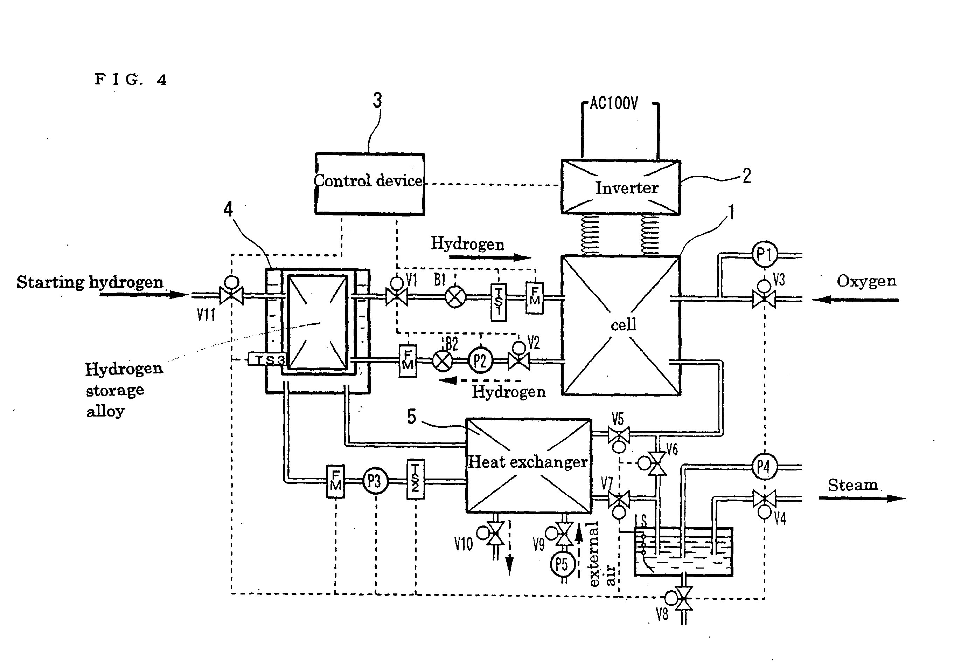

Then, a hydrogen fuel tank was manufactured by using the MmNi_{4.5}Al_{0.5} alloy and a fuel cell was constructed. Fig. 4 is a system flow chart showing an embodiment of a fuel cell. The hydrogen fuel tank is provided with a solenoid valve V11 for introducing starting hydrogen, as well as a solenoid valve V1 for supplying hydrogen to the fuel cell and a solenoid valve V2 for recovering the hydrogen returned from the fuel cell to the tank disposed between the tank and the fuel cell 1, and they are adapted to supply hydrogen by a pump P2. Further, pressure valves B1 and B2 and flow meters FM are provided in the course of the pipeline for controlling the pressure and the flow rate of hydrogen, and the entire system including a heat exchanger 5 utilized for temperature elevation and temperature lowering is controlled by the control device 3. In the heat exchanger 5, heat exchange is conducted between exhausted heat possessed in steams at a relatively high temperature exhausted from the fuel cell 1 and cold water as a cold temperature medium and temperature sensors TS1 - TS3 or the flow meters FM and the pumps are controlled to control the temperature to an aimed level. In the fuel cell 1, a DC power can be obtained by reaction between oxygen and hydrogen and an inverter 2 for converting the DC power into a predetermined AC power is connected with the fuel cell.

At first, a hydrogen reservoir at a high pressure was connected with a hydrogen supply port of the tank 4 and the solenoid valve V11 was opened to supply hydrogen into the tank up to a hydrogen pressure of 1 MPa. In this case, the pump 5 was operated to send external air to the heat exchanger and the circulation pump 3 was controlled properly such that the temperature of the tank (T0) was at 20°C. After the completion of occlusion, the solenoid valve V11 was closed and, successively, opening/closure of the solenoid valves V1 and V2 and the pressure valves B1 and B2 were controlled to supply hydrogen to the fuel cell 1. In this step, the temperature of the hydrogen fuel tank was kept at 20°C in the initial stage of hydrogen supply and it was elevated to 85°C in the final stage where the amount of residual hydrogen was decreased to 30%.

At the same time with the supply of hydrogen, oxygen was supplied from an oxygen electrode, and oxygen and hydrogen were reacted in the fuel cell to give electric power. As a result of examining the electric power, increase of the electric power by about 10% was confirmed by the temperature elevation for the hydrogen fuel tank from 20°C to 85°C in the final stage of the hydrogen desorption process.

### (Example 2)

After weighing commercially available starting materials, the mixture was subjected to arc melting in argon with a water cooled copper hearth to prepare 30 g of a Ti₃₈Cr₅₇V₅ alloy, which was successively kept at 1400°C for 10 min and then quenched in iced water.

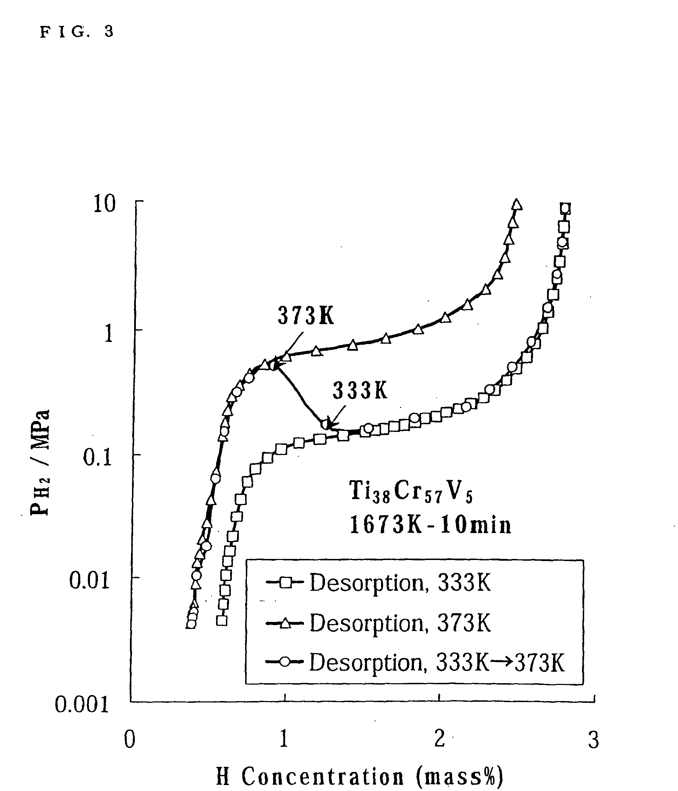

Fig. 3 shows high pressure PCT curves for the Ti₃₈Cr₅₇V₅ alloy. The boundary point is at 0.1 MPa. Triangles (Δ) show a PCT curve in the hydrogen desorption process in a case of absorbing and desorbing the alloy at 100°C. Squares (□) show a PCT curve for hydrogen desorption process in a case of conducting dehydrogenation at 100°C and then absorption at 60°C and desorption at 60°C. Circles (○) show a PCT curve in the hydrogen desorption process in a case of conducting absorption in the same manner as in "□" and temperature elevation from 60°C to 100°C in the final stage of the desorption process. When temperature elevation was conducted in the hydrogen desorption process (○), the amount of residual hydrogen was about 43%. It was verified from the data that the effective hydrogen occlusion amount could be increased by 19% in a case of using the hydrogen fuel tank in a range from 0.1 MPa to 1 MPa by heating the hydrogen storage alloy to 100°C from the instance where the amount of residual hydrogen was 43%.

While the embodiments of the present invention have been described with reference to the drawings, the invention is not limited to each of the examples but it will be apparent any variations or modifications within a range not departing the gist of the invention is also included in the scope of the invention.

For example, in Example 1, T2 was controlled at 85°C since water was used for cold temperature medium. However, the invention is not restricted to this same but heating by a heater or the like can also be utilized. In the same manner, a method of utilizing coolant other than water for cooling and a method of enabling both cooling and heating by a Peltier device or the like can also be utilized. Further, in the application use of supplying electric power to electronic equipments, a DC/DC converter may be connected instead of the inverter.

Further, in each of the examples described above, while the MmNi_{4.5}Al_{0.5} alloy or the Ti₃₈Cr₅₇V₅ alloy was used as the hydrogen storage alloy, the invention is not restricted to them. As the alloy, any hydrogen storage alloy capable of occluding and releasing hydrogen of a practical capacity under a practical pressure can be used.

### Description for References

- 1: fuel cell
- 2: inverter
- 3: control device (control section)
- 4: hydrogen fuel tank (hydrogen storage tank)
- 5: heat exchanger (temperature control device)

## Claims

1. A hydrogen absorption and desorption method for a hydrogen storage alloy in which an alloy temperature of said hydrogen storage alloy in the final stage of a hydrogen desorption process (T2) is made higher than an alloy temperature of the hydrogen storage alloy in the initial stage of the hydrogen desorption process (T1) (T2 > T1), and the alloy temperature in the final stage (T2) is controlled to a temperature where a hydrogen pressure at a boundary point between a plateau region of a PCT curve and an inclined region adjacent thereto is a normal pressure or higher.

2. The hydrogen absorption and desorption method for a hydrogen storage alloy according to claim 1, wherein the hydrogen storage alloy is an alloy having a hydrogen pressure of from 0.08 MPa to 1 MPa at a boundary point between a plateau region on a PCT curve of the alloy and an inclined region adjacent thereto at the alloy temperature in the initial stage of the hydrogen desorption process (T1).

3. The hydrogen absorption and desorption method for a hydrogen storage alloy according to claim 1 or 2, wherein the alloy temperature in the final stage (T2) is 150°C or lower.

4. The hydrogen absorption and desorption method for a hydrogen storage alloy according to any of claims 1 to 3, wherein a process at or after the instance where hydrogen contained in the hydrogen storage alloy is reduced to any residual amount of 50% or less in the hydrogen desorption process is defined as the final stage of the hydrogen desorption process.

5. The hydrogen absorption and desorption method of a hydrogen storage alloy according to any of claims 1 to 4, wherein a process at or after the instance where hydrogen contained in the hydrogen storage alloy is reduced to any residual amount of 25% or less in the hydrogen desorption process is defined as the final stage of the hydrogen desorption process.

6. A fuel cell comprising a hydrogen storage tank incorporating a hydrogen storage alloy, a temperature controlled device of elevating or lowering directly a temperature of the hydrogen storage alloy or an atmospheric temperature of the storage alloy, a fuel cell for outputting an electric power via chemical change of hydrogen supplied from the hydrogen storage tank, and a control section for making an alloy temperature of the hydrogen storage alloy in the final stage of a hydrogen desorption process (T2) higher than an alloy temperature of the hydrogen storage alloy in the initial stage of the hydrogen desorption process (T1) (T2 > T1), and controlling the alloy temperature in the final stage (T2) to a temperature that the hydrogen pressure at a boundary point between a plateau region of a PCT curve and an inclined region adjacent thereto is a normal pressure or higher.

7. The fuel cell according to claim 6, wherein the control section is adapted to properly control the pressure, the temperature and flow rate of the hydrogen gas supplied to the hydrogen storage tank and the fuel cell.

8. The fuel cell according to claim 6 or 7, wherein the temperature control device can utilize the heat dissipated from the fuel cell or the heat of exhaust gases exhausted from the fuel cell for the temperature elevation.
